Europäisches Patentamt

European Patent Office

Office européen des brevets

(11) Numéro de publication: **0 241 389**
**A1**

## (12) DEMANDE DE BREVET EUROPEEN

(21) Numéro de dépôt: 87420086.8

(22) Date de dépôt: 31.03.87

(51) Int. Cl.⁴: **D 21 F 3/08**

(30) Priorité: 01.04.86 FR 8604816

(43) Date de publication de la demande:
14.10.87 Bulletin 87/42

(84) Etats contractants désignés:
AT BE CH DE ES FR GB GR IT LI LU NL SE

(71) Demandeur: **GERLAND STOWE WOODWARD
INDUSTRIES BV Société en nom collectif dite :
Zone Industrielle Avenue Lionel Terray
Meyzieu (Rhône) (FR)**

(72) Inventeur: **Dupoyet, Guy
79 rue de la République
F-69740 Genas (FR)**

**Bouchet, Jean-Claude
88 rue Jean Sarrazin
F-69008 Lyon (FR)**

(74) Mandataire: **Maureau, Philippe et al
Cabinet Germain & Maureau Le Britannia - Tour C 20, bld
Eugène Déruelle
F-69003 Lyon (FR)**

(54) Cylindre de presse destinée notamment à éliminer le liquide d'un matériau en feuille, tel que pâte à papier, élaboré en continu, et presse comportant un tel cylindre.

㉝ Le cylindre (10) comporte un corps creux (11) en un matériau rigide, revêtu d'une couche (12) en un matériau plus souple, de type élastomère. Des trous et/ou rainures (33) sont ménagés dans la couche de revêtement (12). Ces trous et/ou rainures (33) sont inclinés, et présentent des inclinaisons dans des sens différents les uns des autres, ce qui permet d'augmenter l'effet de pompage du liquide à éliminer.

FIG.3

**Description**

## CYLINDRE DE PRESSE DESTINEE NOTAMMENT A ELIMINER LE LIQUIDE D'UN MATERIAU EN FEUILLE, TEL QUE PATE A PAPIER, ELABORE EN CONTINU, ET PRESSE COMPORTANT UN TEL CYLINDRE

La présente invention vise notamment à améliorer l'élimination du liquide d'un matériau en feuille élaboré en continu, tel que pâte à papier, chargée de liquide, à l'aide de cylindres-presseurs.

Cette invention est notamment destinée à l'industrie de transformation de pâte à papier ou papier, carton ou similaire.

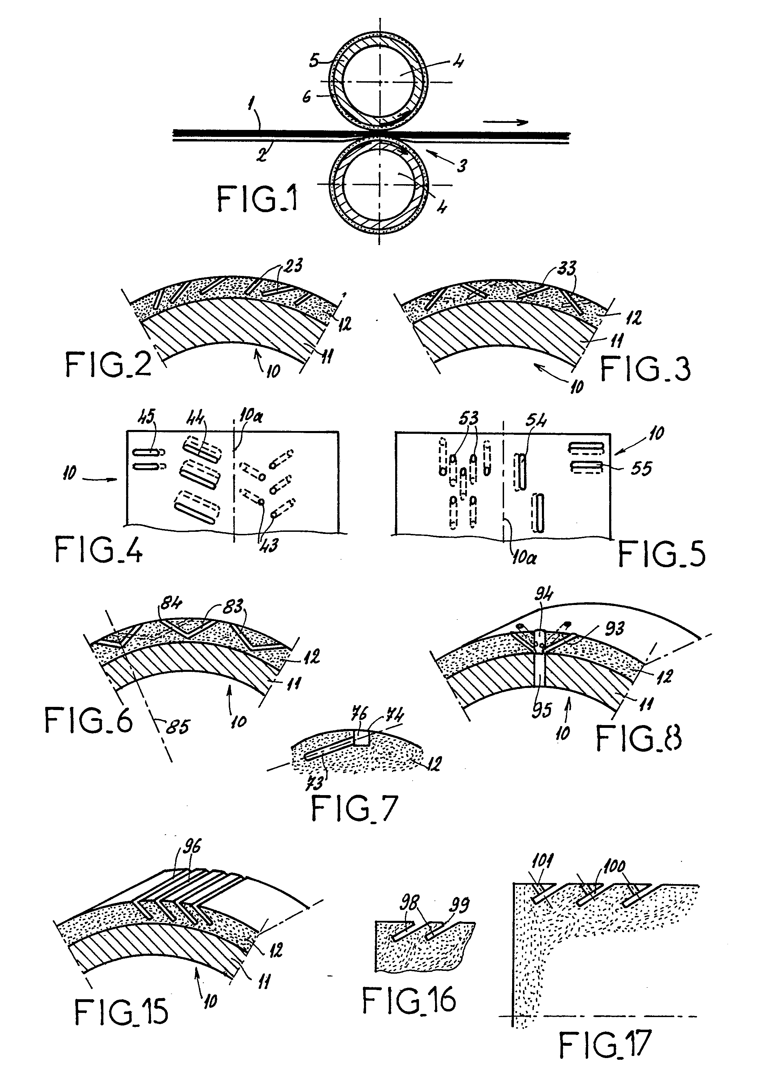

En effet, il est bien connu que le papier ou similaire (il sera parlé de feuille de papier dans le reste de la description pour plus de simplicité), est obtenu à partir de la pâte à papier par une succession d'opérations visant notamment à structurer la feuille de papier et à éliminer de la pâte l'eau contenue dans celle-ci ainsi qu'à la sécher. L'une de ces opérations est représentée schématiquement à la figure 1 ; elle consiste à faire passer la pâte à papier 1 chargée d'eau, qui est généralement soutenue par un tapis en feutre 2, entre des presses cylindriques 3.

Ainsi que le montre la figure 1, une telle presse 3 est formée de deux cylindres 4 pressés l'un contre l'autre et tournant en sens inverse l'un de l'autre, de façon à entraîner la feuille de papier 1 située entre ceux-ci. Ces cylindres 4 laminent la pâte ou feuille de papier 1, lorsqu'elle passe entre ceux-ci, structurent cette pâte ou feuille, et expulsent une partie de l'eau contenue dans celle-ci.

Ainsi que le montre notamment cette figure 1, chaque cylindre 4 est traditionnellement formé d'un corps métallique 5 et d'une couche 6 de matériau plus souple que le métal.

Du fait des dimensions extérieures importantes de ces cylindres 4 (diamètre extérieur souvent compris entre 200 et 2 000 mm et longueur souvent comprise entre 2 et 15 mètres), le corps 5 de ceux-ci est généralement creux.

La couche 6 de matériau souple est généralement réalisée dans un matériau de type polymère tel que élastomère, (caoutchouc, polyuréthane ou autre), matériau thermoplastique ou thermodurcissable.

L'épaisseur de cette couche peut varier de quelques centièmes de millimètres à plusieurs centimètres selon les cylindres considérés, et dans certains cas, le corps 5 du cylindre lui-même peut être entièrement constitué d'un ou plusieurs polymères.

Afin d'améliorer l'élimination de l'eau, il a été proposé de ménager des trous radiaux (à la précision des moyens d'usinage près) dans la couche de revêtement 6 de chaque cylindre 4 (système connu sous la dénomination commerciale DRI-PRESS de STOWE-WOODWARD).

Du fait de la compression de cette couche 4 au niveau de la zone de contact des deux cylindres 4 de chaque presse 3, ces trous réalisent un effet de pompage de l'eau contenue dans la pâte à papier 1 et servent donc notamment à mieux éliminer l'eau de cette pâte à papier au cours du laminage de celle-ci entre les cylindres 4, tout en limitant le phénomène de marquage de papier (bien connu dans la profession sous le nom de "shadow marking").

Les feutres 2 installés autour des cylindres 4 servent également à améliorer le transfert de l'eau hors de la feuille de papier 1.

Il a été également proposé de ménager dans le revêtement des trous radiaux traversants prolongés éventuellement par des trous également traversants et coaxiaux à ceux-ci ménagés dans le corps ou virole du cylindre. Dans ce cas, un système d'aspiration est généralement prévu à l'intérieur du cylindre, afin de renforcer l'effet d'aspiration donné par les trous et d'augmenter l'efficacité de ceux-ci.

A la place des trous ou en combinaison avec ceux-ci, des rainures circulaires ou hélicoïdales peuvent être également prévues dans le revêtement et/ou le corps du cylindre (système connu sous la dénomination commerciale VENTA-NIP de la Société BELOIT). Ces rainures servent également à structurer la feuille de papier, à renforcer l'action d'élimination de l'eau, et ont une section droit, c'est-à-dire perpendiculaire au plan tangent au cylindre au niveau de l'ouverture de la rainure.

Dans le US-1 938 444, il est proposé un cylindre de presse dans lequel des trous borgnes inclinés sont ménagés dans le revêtement du cylindre. Mais il s'agit ici de trous simples, non sécants, qui sont tous inclinés dans le même sens par rapport au sens de rotation et dont l'axe est à chaque fois contenu dans un même plan transversal du cylindre.

Enfin, le US-2 006 S519 montre un cylindre de presse dans lequel des trous inclinés débouchants également contenus dans un même plan transversal du cylindre sont ménagés à la fois dans le revêtement et dans la virole métallique du cylindre. Une telle construction est extrêmement difficile et coûteuse à réaliser puisqu'elle nécessite un usinage de la virole et donc une virole spéciale.

Cependant, toutes ces dispositions ne permettent toujours pas d'éliminer totalement l'excès d'eau contenue dans la feuille de papier 1, et l'opération de laminage est ensuite généralement suivie d'une opération de séchage, au cours de laquelle l'excès d'eau qui n'a pu être enlevé mécaniquement doit être enlevé thermiquement dans une partie sècherie de la machine à papier, laquelle opération de séchage est bien évidemment fort coûteuse en énergie.

En outre, les systèmes tels que celui montré dans le US-2 006 519 sont extrêmement coûteux, puisqu'ils nécessitent une virole spéciale.

Le but de la présente invention est de remédier à ces inconvénients et de fournir des cylindres permettant d'augmenter encore l'élimination mécanique de l'eau au cours de la phase de laminage des feuilles de papier fabriquées en continu, et ne nécessitant pas un usinage spécial de la virole.

Ce but est atteint dans le cylindre selon l'invention, qui est du type présentant des trous et/ou des rainures non radiaux ménagés dans le revêtement de type élastomère de ce cylindre, en ce que les trous et/ou rainures sont inclinés dans des sens différents les uns des autres.

Dans le cas où des trous radiaux sont ménagés dans la paroi du corps de cylindre ou virole, les trous et/ou rainures du revêtement sont disposés de façon à communiquer avec ces trous radiaux, ce qui permet de conserver la virole.

Les trous peuvent être disposés ou non dans un plan perpendiculaire à l'axe du cylindre ; ils peuvent être combinés de différentes façons entre eux ou avec des rainures. Ces trous et rainures peuvent également être combinés avec les trous et rainures radiaux de type connu.

De toute façon, l'invention sera mieux comprise et d'autres caractéristiques seront mises en évidence à l'aide de la description qui suit en référence au dessin schématique annexé illustrant à titre d'exemples non limitatifs plusieurs formes de réalisation du cylindre selon l'invention :

Figure 2 est une vue en coupe transversale partielle d'un cylindre selon une première forme de réalisation des trous dans le revêtement du cylindre ;

Figure 3 est une vue similaire à figure 2 illustrant un autre cas de réalisation des trous dans le revêtement du cylindre ;

Figure 4 est une vue de dessus d'un cylindre illustrant trois autres modes de réalisation des trous ;

Figure 5 est une vue similaire à figure 4 montrant encore trois autres formes de réalisation des trous dans un cylindre ;

Figures 6 à 14 sont des vues similaires aux figures 2 et 3 montrant d'autres formes de réalisation des trous ;

Figure 15 est une vue en perspective avec section transversale d'un cylindre montrant une première forme de réalisation de rainures dans le cylindre ;

Figures 16 à 19 sont des vues partielles en coupe longitudinale d'un cylindre montrant quatre autres formes de réalisation de rainures dans celui-ci.

Ainsi que le montre la figure 2, le cylindre 10 selon l'invention est formé d'un corps creux 11 métallique ou constitué d'un ou plusieurs matériaux synthétiques rigides (tels que polymère), et d'une couche de revêtement 12 en un matériau plus souple (élastomère, caoutchouc, polyuréthane).

Des trous borgnes 23 présentant différentes inclinaisons par rapport à la direction radiale sont ménagés dans le revêtement 12 du cylindre. Ces trous 23 permettent d'optimiser l'effet de pompage déjà réalisé avec les trous inclinés connus par le brevet US-1 938 444, selon les cas d'utilisation, qui sont extrêmement variés en papeterie.

Comme montré à la figure 3, ces trous borgnes 33 peuvent présenter des inclinaisons alternativement opposées par rapport à une même direction radiale.

Dans les exemples montrés aux figures 2 et 3, l'axe de chacun des trous 23,33 est entièrement contenu dans un même plan perpendiculaire à l'axe du cylindre, mais, ainsi que le montrent les figures 4 et 5, ces trous peuvent également s'étendre dans la direction longitudinale du cylindre (sans être forcément parallèles à l'axe longitudinal de celui-ci).

Dans le cas de la figure 4, les trous 43 s'étendent dans la direction longitudinale du cylindre et sont inclinés par rapport à l'axe longitudinal10a du cylindre.

Les figures 4 et 5 montrent également des trous respectivement (44,45) et (54,55) de forme oblongue.

Dans le cas montré à la figure 5, les trous 53 s'étendent dans la direction longitudinale du cylindre 10, parallèlement à l'axe 10a de celui-ci, et sont également inclinés par rapport à un plan transversal passant par exemple par leur ouverture.

Ainsi donc n'importe quelle inclinaison des trous 23,33,43,53 est possible du moment que l'angle formé par l'axe de ces trous avec un plan tangentant le cylindre ou son revêtement au niveau du débouché de ceux-ci, soit différent de 90° et que les inclinaisons de ces trous les uns par rapport aux autres soient différentes.

Ces différentes inclinaisons des trous peuvent être obtenues par des moyens de moulage ou d'usinage appropriés du revêtement ou du cylindre.

La figure 6 montre une autre variante de l'invention, dans laquelle les trous 83 présentent des inclinaisons opposées symétriques par rapport à un même rayon 85 et se rejoignent à l'intérieur du corps de cylindre 11 ou de son revêtement 12. Cette disposition permet d'augmenter encore le rendement du système ; en effet, du fait du rôle obturateur de trous partiellement joué par le feutre ou la feuille de papier 1 elle-même, le phénomène de pompage, créé par la reprise de volume initial des trous 83 au sortir de la zone de pression des deux cylindres, aura lieu aux deux ouvertures 84 par lesquelles ces trous 83 débouchent à l'extérieur du cylindre et sera donc augmenté d'autant.

La figure 7 montre encore une autre variante de réalisation de l'invention, dans laquelle les trous 73 sont très inclinés, par rapport à un rayon passant par leur ouverture 74 dans la couche extérieure 12 du cylindre, et s'étendent même pratiquement circonférentiellement.

Dans ce cas, ces trous 73 sont sécants avec des trous radiaux 76 ou faiblement inclinés de façon à renforcer la tenue de l'ouverture 74 du trou 73 au niveau de la surface extérieure du cylindre. Cette disposition autorise une inclinaison plus grande des trous 73, et, par conséquent, une longueur de ceux-ci et un effet de pompage encore plus important pour une même épaisseur du revêtement 12.

La figure 8 montre un autre exemple de réalisation destiné notamment à un cylindre 11 présentant intérieurement des moyens d'aspiration.

Dans ce cas, plusieurs trous inclinés 93 combinés avec un trou radial 94 se rejoignent et sont ainsi reliés à un autre trou 95 traversant radialement le corps11 du cylindre, sur toute l'épaisseur de celui-ci.

Cette disposition permet de réduire le nombre de trous traversants dans la paroi du corps de cylindre 11 et donc de limiter le risque toujours important de fragilisation du cylindre lui-même. Elle permet également d'augmenter l'effet de pompage tout en conservant un corps de cylindre de type classique.

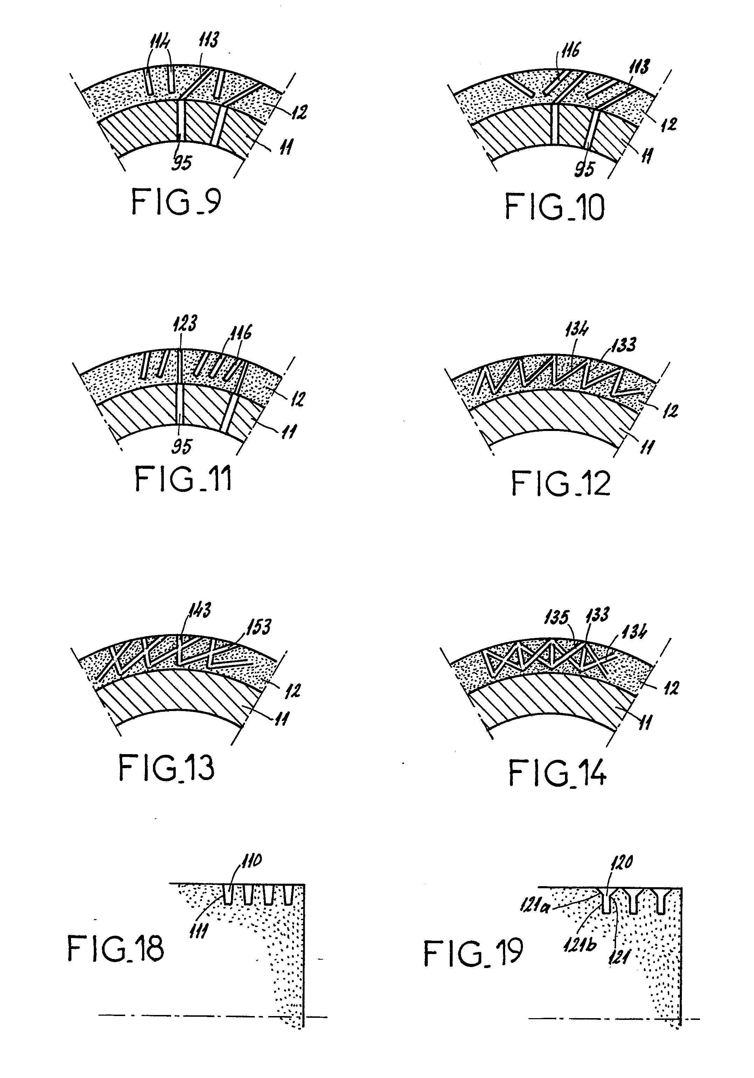

Les figures 9 à 11 montrent différentes possibilités de combinaisons de trous inclinés ménagés dans le revêtement 12 de cylindre avec des trous radiaux ménagés dans le corps 11 du cylindre.

Ainsi dans l'exemple de la figure 9, des trous radiaux traversants 95 sont ménagés dans le corps 11 de cylindre et communiquent chacun avec un trou incliné 113 ménagé dans le revêtement 12 du cylindre et traversant celui-ci de part en part. Des trous borgnes radiaux 114 sont, par ailleurs, ménagés dans le revêtement 12 du cylindre alternativement avec les trous inclinés 113.

Cette disposition permet d'augmenter l'effet de pompage tout en conservant un corps de cylindre avec trous radiaux de type classique.

Dans l'exemple de la figure 10, des trous inclinés 113, ménagés dans le revêtement 12 et associés avec des trous radiaux 95 ménagés dans le corps de cylindre, sont combinés avec des trous borgnes non radiaux 116 ménagés dans le revêtement 12 du cylindre. Les inclinaisons de ces trous 116 peuvent être différentes les unes des autres comme montré dans cette figure 10 ou peuvent également être dans le même sens.

Dans l'exemple de la figure 11, des trous radiaux traversants 95 ménagés dans le corps de cylindre 11 sont combinés chacun avec un trou radial 123 traversant ménagé dans le revêtement 12 du cylindre. Chaque trou 123 s'étend dans le prolongement du trou radial 95 associé et coaxialement à celui-ci. Des trous borgnes inclinés 116 sont également ménagés dans le revêtement 12 du cylindre.

De même que dans l'exemple de la figure 9, les deux exemples des figures 10 et 11 permettent de réutiliser des corps de cylindre 12 avec trous radiaux 95 de type connu et ne nécessitent donc pas un usinage particulier (fort onéreux) ni une fabrication spéciale de ces corps de cylindre.

Les figures 12 à 14 montrent différents exemples de réalisation de trous borgnes similaires aux trous borgnes 83 de la figure 6 et se rejoignant à l'intérieur du revêtement 12 du cylindre.

Dans le cas de la figure 12, des trous borgnes radiaux 133 ménagés dans le revêtement sont alternés avec des trous borgnes inclinés 134 ménagés également dans le revêtement 12. Ainsi que le montre cette figure, chaque trou incliné 134 est réalisé de façon à relier entre eux les deux trous radiaux 133 consécutifs et situés de part et d'autre de celui-ci. Chaque trou incliné 134 s'étend donc depuis l'extrémité inférieure d'un trou radial 133 jusqu'à l'extrémité supérieure, et débouchant à l'extérieur, d'un autre trou radial 133.

Dans l'exemple de la figure, les axes de chacun de ces trous 133,134 sont situés dans un même plan transversal, mais les trous 134 pourraient tout aussi bien servir à relier des trous radiaux 133 dont les axes se trouvent dans des plans transversaux différents.

La figure 13 montre également une forme de réalisation dans laquelle des trous borgnes radiaux 143 sont raccordés, à leur extrémité inférieure située à l'intérieur du revêtement, à des trous borgnes inclinés 153. Dans ce cas, contrairement au précédent, les trous 153 débouchent librement à l'extérieur du revêtement 12.

La figure 14 montre un example de réalisation assez similaire à celui de la figure 12, dans lequel des trous inclinés 134 relient l'extrémité inférieure d'un trou borgne radial 133 à l'extrémité supérieure d'un autre trou radial 133 adjacent. Dans le cas de cette figure, il est également prévu des trous borgnes 135 qui sont inclinés en sens inverse des trous borgnes 134 et qui relient également chacun les extrémités inférieure d'un trou radial 133 à l'extrémité supérieure d'un trou radial adjacent 133. Ces trous borgnes 135, inclinés en sens inverse des trous 134, peuvent aussi ne pas relier les mêmes trous radiaux 133, mais relier une autre série de trous radiaux 133 placés sur le cylindre sur une circonférence immédiatement voisine.

Dans une autre variante de la présente invention, montrée à la figure 15, des rainures 96 s'étendant longitudinalement sont ménagées dans la couche 12 de revêtement du cylindre 10.

De même que pour les trous 23,33...93 décrits ci-avant, les rainures 96 font, avec un plan T tangent à leur ouverture 97 dans le cylindre, un angle $\alpha$ différent de 90° et ne s'étendent donc pas radialement dans l'épaisseur du revêtement 12.

Dans ce cas, les rainures 96 sont, de préférence, fines et profondes. Ces rainures 96 inclinées permettent également d'augmenter l'effet de pompage par rapport à des rainures dont l'axe serait contenu dans un même plan radial.

Un autre avantage complémentaire du phénomène de "pompage" est qu'une rainure 96 inclinée se trouve écrasée et presque fermée sous l'effet de la pression au moment du passage entre les cylindres 10, ce qui réduit sensiblement sa largeur d'ouverture et donc son marquage sur le papier.

La figure 16 montre également des rainures inclinées 98, qui ne s'étendent pas longitudinalement mais transversalement à la direction du cylindre et qui sont par exemple circulaires ou en forme d'hélice. De telles rainures circulaires sont connues en soi.

La figure 16 montre un autre exemple de réalisation de rainures 98 similaires aux rainures 96 de la figure 15, mis à part le fait que l'arête aigüe 99, plus fragile, délimitée par chaque rainure 98 dans le revêtement 12 est tronquée, de façon à renforcer la résistance des bords de l'ouverture de chacune de ces rainures 98.

Dans l'exemple de la figure 17, des rainures 100 similaires aux rainures 96 sont également reliés à des trous 101 débouchant à l'extérieur du revêtement 12. Ces rainures pourraient également communiquer avec des trous traversant la paroi du corps 11 de cylindre.

Enfin, les figures 18 et 19 montrent la réalisation de rainures avec des flancs inclinés permettant d'augmenter l'effet d'évacuation d'eau par ces rainures et donc d'augmenter le phénomène de pompage de celles-ci.

Dans l'exemple de la figure 18, les rainures 110 qui s'étendent transversalement à la direction du cylindre sont munies de flancs 111 inclinés depuis l'extrémité supérieure jusqu'à l'extrémité inférieure de ces rainures 110.

Dans l'exemple de la figure 19, les flancs 121 des rainures 120 qui s'étendent également transversalement à la direction longitudinale du cylindre ne sont inclinés que dans leur partie supérieure 121a, leur partie inférieure 121b étant, dans cet exemple, perpendiculaire à l'axe du cylindre.

Bien entendu, un tel mode de réalisation des rainures avec des flancs inclinés peut également être appliqué à des rainures s'étendant longitudinalement, ou ayant un axe général lui-même incliné.

Comme il va de soi, la présente invention ne se limite pas aux seuls exemples de réalisation montrés ci-avant à titre d'exemples non limitatifs, mais en englobe au contraire toutes les formes de réalisation mettant en oeuvre des moyens similaires ou équivalents.

C'est ainsi que les différentes formes de réalisation montrées ci-avant peuvent être combinées ensemble ou avec des trous et/ou rainures radiales, sans que l'on sorte pour autant du cadre de la présente invention.

Enfin, cette invention s'applique particulièrement bien à l'industrie papetière, mais il est évident qu'elle peut être appliquée partout où l'on souhaite éliminer un liquide d'une feuille élaborée en continu (rouleaux essoreurs de la métallurgie par exemple).

## Revendications

1 - Cylindre de presse (3) destiné notamment à éliminer le liquide contenu dans un matériau en feuille (1) tel que pâte à papier, élaboré en continu, du type comprenant des trous et/ou rainures non radiaux ménagés dans le revêtement de type élastomère du cylindre, caractérisé en ce que les trous (23, 33, 43, 53, 83) et/ou rainures sont inclinés dans des sens différents les uns des autres.

2 - Cylindre de presse selon la Revendication 1, caractérisé en ce que les trous (73) et/ou rainures sont sécants avec des trous radiaux (76) ou faiblement inclinés.

3 - Cylindre de presse selon l'une des Revendications 1 ou 2, caractérisé en ce que les trous (83, 93) se rejoignent à l'intérieur du revêtement de cylindre (20).

4 - Cylindre de presse selon la Revendication 3, caractérisé en ce qu'au moins un trou incliné (93) se raccorde à un trou radial (94) ménagé dans la paroi du corps de cylindre (11).

5 - Cylindre de presse selon l'une des Revendications 1 à 4, caractérisé en ce que l'axe de chacun des trous (43, 44, 53, 54, 55) n'est pas contenu dans un même plan perpendiculaire à l'axe du cylindre (3).

6 - Cylindre de presse selon l'une des Revendications 1 à 5, caractérisé en ce que les trous (44, 45, 55, 56) ont une forme oblongue.

7 - Cylindre de presse selon l'une des revendications 1 à 6, caractérisé en ce qu'il comprend alternativement des trous borgnes radiaux (114) ménagés dans le revêtement (12) du cylindre et des trous inclinés (113) ménagés dans le revêtement (12) et se raccordant à des trous radiaux (95) traversants ménagés dans le corps (11) du cylindre.

8 - Cylindre de presse selon l'une des revendications 1 à 6, caractérisé en ce qu'il comporte des trous borgnes inclinés (116) ménagés dans le revêtement (12) du cylindre et des trous inclinés (113) ménagés dans le revêtement (12) et se raccordant à des trous radiaux (95) traversants ménagés dans le corps (12) du cylindre.

9 - Cylindre de presse selon l'une des revendications 1 à 6, caractérisé en ce qu'il comporte des trous borgnes inclinés (116) ménagés dans le revêtement (12) du cylindre et des trous radiaux (123) ménagés dans le revêtement (12) et se raccordant à des trous radiaux (95) traversants ménagés dans le corps (12) du cylindre.

10 - Cylindre de presse selon l'une des revendications 1 à 6, caractérisé en ce qu'il comprend une alternance de trous borgnes radiaux (133,143) et inclinés (134,153), chaque trou borgne incliné (134,153) étant relié à une extrémité d'au moins un trou radial (133,143).

11 - Cylindre de presse selon la revendication 10, caractérisé en ce que chaque trou borgne incliné (134) relie les extrémités opposées de deux trous borgnes radiaux (133) consécutitfs.

12 - Cylindre de presse selon l'une des Revendications 1 à 6, caractérisé en ce qu'il comporte des rainures (98) inclinées par rapport au sens de rotation du tambour et en ce que l'arête aiguë (99) de chaque rainure (98) est tronquée.

13 - Cylindre de presse selon l'une des Revendications 1 à 6, caractérisé en ce qu'il comporte des rainures (100) inclinées par rapport au sens de rotation du tambour et en ce que chaque rainure est reliée à des trous (101) débouchant à l'extérieur du revêtement (12).

14 - Cylindre de presse selon la revendication 12 ou 13, caractérisé en ce que les rainures (110,120) sont munis de flancs respectivement (111,121a) inclinés.

15 - Cylindre de presse selon l'une des Revendications 1 à 14, caractérisé en que les trous et/ou rainures non radiaux sont combinés avec des trous et/ou rainures radiaux.

FIG.1

FIG.2

FIG.3

FIG.4

FIG.5

FIG.6

FIG.7

FIG.8

FIG.15

FIG.16

FIG.17

0241389

FIG_9

FIG_10

FIG_11

FIG_12

FIG_13

FIG_14

FIG_18

FIG_19

Office européen
des brevets

**RAPPORT DE RECHERCHE EUROPEENNE**

Numéro de la demande

EP  87 42 0086

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 100 085 (DIETL) <br> * En entier * | 1,3 | D 21 F   3/08 |
| Y | US-A-1 938 444 (VEDDER) <br> * En entier * | 1 | |
| Y | US-A-1 834 852 (KUTTER) <br> * En entier * | 1 | |
| A | | 4,15 | |
| A | FR-A-1 428 635 (KUSTERS) <br><br> * En entier * | 1,2,3, 15 | |
| A | FR-A-1 386 274 (STRINDLUND) <br> * En entier * | 1-4,15 | **DOMAINES TECHNIQUES RECHERCHES (Int. Cl.4)** |
| A | US-A-1 742 991 (HEYS) <br> * En entier * | 1,2 | D 21 F <br> F 26 B <br> B 29 C |
| A | US-A-2 006 519 (STANDLEY) <br> * En entier * | 1,4 | |
| A | DE-A-2 737 882 (VOITH) <br> * En entier * | 1,5 | |
| | ---        -/- | | |

Le présent rapport de recherche a été établi pour toutes les revendications

| Lieu de la recherche | Date d'achèvement de la recherche | Examinateur |
|---|---|---|
| LA HAYE | 10-07-1987 | DE RIJCK F. |